# EUROPEAN PATENT APPLICATION

(11) **EP 3 432 114 A1**
(43) Date of publication of application: **23.01.2019**
(21) Application number: 16894505.3
(22) Date of filing: 22.09.2016
(51) Int. Cl.: G05G 1/30, B60K 23/02, G05G 1/44

(54) **VEHICULAR OPERATION PEDAL DEVICE**

(30) Priority: 15.03.2016 JP 2016050486
(71) Applicant: Toyoda Iron Works Co., Ltd., Toyota-shi Aichi 471-8507 (JP)
(72) Inventor: SUGIURA, Hikaru, Toyota-shi Aichi 471-8507 (JP)
(74) Representative: TBK
(86) International application number: PCT/JP2016/077918
(87) International publication number: WO 2017/158888

(57) **Abstract**

Relating to a vehicle operation pedal device that includes a pedal bracket having a pair of side plates, a support shaft, and an operation pedal. And to provide a vehicle operation pedal device capable of improving work efficiency when the operation pedal is assembled to the pedal bracket via a support shaft made of resin.

A vehicle operation pedal device 1 includes a pedal bracket 5 having a first side plate 10 and a second side plate 15, an operation pedal 20, and a pedal support shaft 30 made of synthetic resin and is configured to support the operation pedal 20 pivotally around the pedal support shaft 30 with respect to the pedal bracket 5. By moving the pedal support shaft 30 in an insertion direction I, the pedal support shaft 30 is inserted into a first insertion hole 11 formed in the first side plate 10 and is pressed into a second insertion hole 16 formed in the second side plate 15. A plurality of shaft side grooves 32 are formed at an end of the pedal support shaft 30, and each ridge part 17 formed in the second insertion hole 16 of the second side plate 15 is respectively pressed into each the shaft side groove 32.

## Description

### FIELD

The present invention relates to a vehicle operation pedal device that includes a pedal bracket having a pair of side plates, a support shaft, and an operation pedal.

### BACKGROUND

Conventionally, a vehicle operation pedal device includes a pedal bracket having a pair of side plates, an operation pedal pivotally arranged to the pedal bracket between the pair of side plates, and a support shaft arranged between the pair of side plates and pivotally supporting the operation pedal and is configured to execute various inputs to a vehicle by a depressing operation of the operation pedal.

As an invention related to the vehicle operation pedal device as described above, for example, an invention disclosed in the Patent Document 1 is known. In a supporting structure of an operation pedal disclosed in the Patent Document 1, the operation pedal is pivotally supported in front and back direction of a vehicle with respect to a pedal bracket attached on a vehicle body side via a support shaft made of resin extending in a vehicle width direction. In the invention disclosed in the Patent Document 1, the support shaft is attached by being inserted into a first support hole formed in a first side plate of the pedal bracket, and a second support hole formed in a second side plate in a state where the support shaft is inserted into the operation pedal. In the patent document 1, the support shaft is rotated around its axis so that a projection part of the support shaft is passed through a passing through hole of the second side plate and is located at a position other than a forming part of the passing through hole in a peripheral edge part of the second support hole. In the patent document 1, the support shaft is prevented from pulling out from the pedal bracket and the operation pedal by being rotated around its axis.

### Related Art Document

### Patent Document

Patent document 1: Japanese Laid-open Patent Publication No. 2011-034428

### SUMMARY

### Problems to be solved by the Invention

In the invention disclosed in the Patent Document 1, the support shaft easily pulls out from the pedal bracket and the operation pedal without rotating the support shaft around its axis. Accordingly, in the invention disclosed in the Patent Document1, the support shaft must be rotated around its axis in addition to insertion of the support shaft into the first side plate, the second side plate of the pedal bracket, and the operation pedal. Namely, in the invention disclosed in the Patent Document 1, when the operation pedal is attached to the pedal bracket via the support shaft, a plurality of works must be carried out, deteriorating work efficiency.

In the vehicle operation pedal device, a user may request replacement of only the operation pedal, and in that case, the support shaft needs to be removed from the pedal bracket and the operation pedal. In the invention disclosed in the Patent Document 1, when the operation pedal is replaced, the support shaft must be removed from the pedal bracket and the operation pedal after releasing the prevention of pulling out by reversely rotating the support shaft around its axis, deteriorating work efficiency in this case.

The present invention relates to a vehicle operation pedal device that includes a pedal bracket having a pair of side plates, a support shaft, and an operation pedal, and provides a vehicle operation pedal device capable of improving work efficiency when the operation pedal is assembled to the pedal bracket via a support shaft made of resin.

### Means for Solving the Problems

A vehicle operation pedal device according to one aspect of the present invention is the vehicle operation pedal device comprising: a pedal bracket including: a first side plate; and a second side plate arranged with a predetermined gap from the first side plate in a vehicle width direction and configured to be faced the first side plate; an operation pedal pivotally arranged with respect to the pedal bracket between the first side plate and the second side plate; and a support shaft made of synthetic resin arranged from the first side plate to the second side plate and configured to be pivotally supported the operation pedal; wherein the support shaft is inserted into a first insertion hole formed in the first side plate and pressed into a second insertion hole formed in the second side plate, an end of the support shaft to be pressed into the second insertion hole includes a plurality of shaft side grooves configured to be depressed from an outer peripheral surface of the support shaft and extended along an axial direction of the support shaft, and the second insertion hole includes a plurality of ridge parts configured to be protruded toward an inside of the second insertion hole, extended in a plate thickness direction of the second side plate, and respectively pressed into the shaft side grooves of the support shaft.

The vehicle operation pedal device includes the pedal bracket having the first side plate and the second side plate, the operation pedal, and the support shaft made of synthetic resin and is configured to support the operation pedal pivotally around the support shaft with respect to the pedal bracket. In the vehicle operation pedal device, the support shaft is inserted into the first insertion hole formed in the first side plate and is pressed into the second insertion hole formed in the second side plate. Namely, according to the vehicle operation pedal device, the support shaft can be pressed into the second insertion hole by inserting the support shaft into the first insertion hole of the first side plate, the operation pedal, and the second insertion hole of the second side plate in order, firmly connecting the support shaft to the pedal bracket. The plurality of shaft side grooves are formed at the end of the support shaft, and the ridge parts formed in the second insertion hole of the second side plate are respectively pressed into the shaft side grooves. Therefore, according to the vehicle operation pedal device, since a portion press-contacting with each other can be increased by cooperation of each the shaft side groove of the support shaft and each the ridge part of the second insertion hole, the support shaft can be attached to the pedal bracket more firmly. According to the vehicle operation pedal device, even in a case where the support shaft is removed from the pedal bracket for replacement of the operation pedal etc., pulling out the support shaft is only needed and thus work efficiency can be improved in this case.

The vehicle operation pedal device according to another aspect of the present invention is the vehicle operation pedal device according to claim 1, wherein the shaft side groove is formed so that an area of a cross section inside the shaft side groove orthogonal to the axial direction gradually increases toward a downstream side in an insertion direction of the support shaft into the second insertion hole.

In the vehicle operation pedal device, the area of the cross section inside the shaft side groove orthogonal to the axial direction gradually increases toward the downstream side in the insertion direction of the support shaft into the second insertion hole. According to the vehicle operation pedal device, when the end of the support shaft is pressed into the second insertion hole, entry of the ridge parts into the shaft side grooves can be facilitated, improving workability of attaching the support shaft to the pedal bracket. According to the vehicle operation pedal device, since the cross-sectional area inside the shaft side groove gradually increases toward the downstream side in the insertion direction of the support shaft into the second insertion hole, as the support shaft is further inserted into the second insertion hole, inner surfaces of the shaft side grooves and the ridge parts can be more firmly press-contacted with each other, easily realizing a desired degree of press-in.

The vehicle operation pedal device according to another aspect of the present invention is the vehicle operation pedal device according to claim 1 or 2, wherein the ridge part is formed so that an area of a cross section of the ridge part orthogonal to the plate thickness direction gradually decreases toward the first side plate in the plate thickness direction of the second side plate.

In the vehicle operation pedal device, the area of the cross section of the ridge part orthogonal to the plate thickness direction gradually decreases toward the first side plate in the plate thickness direction of the second side plate. According to the vehicle operation pedal device, when the end of the support shaft is pressed into the second insertion hole, entry of the ridge parts into the shaft side grooves can be facilitated, improving workability of attaching the support shaft to the pedal bracket. According to the vehicle operation pedal device, since the area of the cross section of the ridge part orthogonal to the plate thickness direction is formed to so as to gradually decrease toward the first side plate in the plate thickness direction of the second side plate, the support shaft is further inserted into the second insertion hole, the ridge parts and the inner surfaces of the shaft side grooves can be more firmly press-contacted with each other, easily realizing a desired degree of press-in.

The vehicle operation pedal device according to one aspect of the present invention is the vehicle operation pedal device comprising: a pedal bracket including: a first side plate; and a second side plate arranged with a predetermined gap from the first side plate in a vehicle width direction and configured to be faced the first side plate; an operation pedal pivotally arranged with respect to the pedal bracket between the first side plate and the second side plate; and a support shaft made of synthetic resin arranged from the first side plate to the second side plate and configured to be pivotally supported the operation pedal, wherein the support shaft is inserted into a first insertion hole formed in the first side plate and pressed into a second insertion hole formed in the second side plate, an end of the support shaft to be pressed into the second insertion hole includes a plurality of shaft side ridge parts configured to be protruded from an outer peripheral surface of the support shaft and extended along an axial direction of the support shaft, and the second insertion hole includes a plurality of fixed grooves configured to be depressed toward an outside of the second insertion hole, extended in a plate thickness direction of the second side plate, and into which the shaft side ridge parts of the support shaft are respectively pressed.

The vehicle operation pedal device includes the pedal bracket having the first side plate and the second side plate, the operation pedal, and the support shaft made of synthetic resin and is configured to support the operation pedal pivotally around the support shaft with respect to the pedal bracket. In the vehicle operation pedal device, the support shaft is inserted into the first insertion hole formed in the first side plate and pressed into the second insertion hole formed in the second side plate. Namely, according to the vehicle operation pedal device, the support shaft can be pressed into the second insertion hole by inserting the support shaft into the first insertion hole of the first side plate, the operation pedal, and the second insertion hole of the second side plate in order, firmly connecting the support shaft to the pedal bracket. The plurality of shaft side ridge parts are formed at the end of the support shaft and are respectively pressed into the fixed grooves formed in the second insertion hole. Therefore, according to the vehicle operation pedal device, since a portion press-contacting with each other can be increased by cooperation of each the shaft side ridge part of the support shaft and each the fixed groove of the second insertion hole, the support shaft can be attached to the pedal bracket more firmly. According to the vehicle operation pedal device, even in a case where the support shaft is removed from the pedal bracket for replacement of the operation pedal etc., pulling out the support shaft is only needed and thus work efficiency can be improved in this case.

The vehicle operation pedal device according to another aspect of the present invention is the vehicle operation pedal device according to claim 4, wherein the shaft side ridge part is formed so that an area of a cross section of the shaft side ridge part orthogonal to the axial direction gradually decreases toward a downstream side in an insertion direction of the support shaft into the second insertion hole.

In the vehicle operation pedal device, the area of the cross section of the shaft side ridge part orthogonal to the axial direction gradually decreases toward the downstream side in the insertion direction of the support shaft into the second insertion hole. According to the vehicle operation pedal device, when the end of the support shaft is pressed into the second insertion hole, entry of the shaft side ridge parts into the fixed grooves can be facilitated, improving workability of attaching the support shaft to the pedal bracket. According to the vehicle operation pedal device, since the cross-sectional area of the shaft side ridge part gradually decreases toward the downstream side in the insertion direction of the support shaft into the second insertion hole, as the support shaft is further inserted into the second insertion hole, the shaft side ridge parts and inner surfaces of the fixed grooves can be more firmly press-contacted with each other, easily realizing a desired degree of press-in.

The vehicle operation pedal device according to another aspect of the present invention is the vehicle operation pedal device according to claim 4 or 5, wherein the fixed groove is formed so that an area of a cross section inside the fixed groove orthogonal to the plate thickness direction gradually increases toward the first side plate in the plate thickness of the second side plate.

In the vehicle operation pedal device, the area of the cross section inside the fixed groove orthogonal to the plate thickness direction gradually increases toward the first side plate in the plate thickness direction of the second side plate. According to the vehicle operation pedal device, when the end of the support shaft is pressed into the second insertion hole, entry of the shaft side ridge parts into the fixed grooves can be facilitated, improving workability of attaching the support shaft to the pedal bracket. According to the vehicle operation pedal device, since the area of the cross section inside the fixed groove gradually increases toward the first side plate in the plate thickness direction of the second side plate, as the support shaft is further inserted into the second insertion hole, the inner surfaces of the fixed grooves and the shaft side ridge parts can be more firmly press-contacted with each other, easily realizing a desired degree of press-in.

The vehicle operation pedal device according to another aspect of the present invention is the vehicle operation pedal device according to claim 4, wherein the shaft side ridge part includes: a first ridge part formed so that the area of the cross section of the shaft side ridge part orthogonal to the axial direction gradually increases toward the downstream side in the insertion direction of the support shaft; and a second ridge part located on the downstream side in the insertion direction relative to the first ridge part and formed so that the area of the cross section of the shaft side ridge part orthogonal to the axial direction gradually decreases toward the downstream side in the insertion direction of the support shaft, and wherein the fixed groove is formed so that an area of a cross section inside the fixed groove orthogonal to the plate thickness direction gradually decreases toward the first plate in the plate thickness direction of the second side plate.

In the vehicle operation pedal device, the shaft side ridge part includes the first ridge part and the second ridge part located on the downstream side in the insertion direction relative to the first ridge part. The second ridge part is formed so that the area of the cross section of the shaft side ridge part gradually decreases toward the downstream side in the insertion direction of the support shaft. According to the vehicle operation pedal device, when the end of the support shaft is pressed into the second insertion hole, entry of the second ridge parts of the shaft side ridge parts into the fixed grooves can be facilitated, improving workability of attaching the support shaft to the pedal bracket. In the vehicle operation pedal device, the first ridge part of the shaft side ridge part is formed so that the cross-sectional area of the shaft side ridge part gradually increases toward the downstream side in the insertion direction of the support shaft, and the cross-sectional area inside the fixed groove of the second insertion hole gradually decreases toward the first side plate in the plate thickness direction of the second side plate. Thus, according to the vehicle operation pedal device, even in a case where a load in a direction where the support shaft is pulled out of the second insertion hole works on the support shaft accidentally, a load opposite to the pulling-out direction can be made to work on the support shaft by cooperation of the first ridge parts and the inner surfaces of the fixed groove, and the support shaft can be prevented from being accidentally pulled out of the pedal bracket and the operation pedal. When the support shaft is removed from the pedal bracket for replacement of the operation pedal etc., pulling out the support shaft is only needed after a larger force in consideration of a load generated by cooperation of the first ridge parts and the inner surfaces of the fixed grooves is worked on the support shaft, and thus work efficiency can be improved in this case.

### Effects of the Invention

The present invention includes the pedal bracket having the first side plate and the second side plate, the operation pedal, and the support shaft made of synthetic resin and is configured to support the operation pedal pivotally around the support shaft with respect to the pedal bracket. The support shaft is inserted into the first insertion hole formed in the first side plate and pressed into the second insertion hole formed in the second side plate. The support shaft can be pressed into the second insertion hole by inserting the support shaft into the first insertion hole of the first side plate, the operation pedal, and the second insertion hole of the second side plate in order, firmly connecting the support shaft to the pedal bracket. The end of the support shaft has the plurality of the shaft side grooves, and the ridge parts formed in the second insertion hole of the second side plate are pressed into the shaft side grooves. Accordingly, since the portion press-contacting with each other can be increased by cooperation of each the shaft side groove of the support shaft and each the ridge part of the second insertion hole, the support shaft can be attached to the pedal bracket more firmly.

### BRIEF DESCRIPTION OF DRAWINGS

[FIG.1] FIG.1 is an external perspective view illustrating a schematic configuration of an operation pedal device according to the first embodiment.
[FIG.2] FIG.2 is an external perspective view illustrating a pedal support shaft according to the first embodiment.
[FIG.3] FIG.3 is a side view illustrating a second side plate and a second insertion hole of a pedal bracket.
[FIG.4] FIG.4 is a cross-sectional diagram illustrating a state before the pedal support shaft is attached to the pedal bracket according to the first embodiment.
[FIG.5] FIG.5 is a cross-sectional diagram illustrating a state in which the pedal support shaft is attached to the pedal bracket according to the first embodiment.
[FIG.6] FIG.6 is an external perspective view illustrating the pedal support shaft according to the second embodiment.
[FIG.7] FIG.7 is an enlarged view of a main part illustrating a structure of the second insertion hole according to the second embodiment.
[FIG.8] FIG.8 is a cross-sectional diagram illustrating a state before the pedal support shaft is attached to the pedal bracket according to the second embodiment.
[FIG.9] FIG.9 is a cross-sectional diagram illustrating a state in which the pedal support shaft is attached to the pedal bracket according to the second embodiment.
[FIG.10] FIG.10 is an external perspective view illustrating the pedal support shaft according to the third embodiment.
[FIG.11] FIG. 11 is an enlarged view of a main part illustrating a structure of the second insertion hole according to the third embodiment.
[FIG.12] FIG.12 is a cross-sectional diagram illustrating a state before the pedal support shaft is attached to the pedal bracket according to the third embodiment.
[FIG.13] FIG.13 is a cross-sectional diagram illustrating a state in which the pedal support shaft is attached to the pedal bracket according to the third embodiment.

### DESCRIPTION OF EMBODIMENTS

### (Fitst Embodiment)

An embodiment (the first embodiment) applying a vehicle operation pedal decive according to the present invention to an operation pedal device 1 used for clutch operation of a vehicle will be hereinafter described in detail with reference to the drawings.

### (Schematic configuration of the operation pedal device)

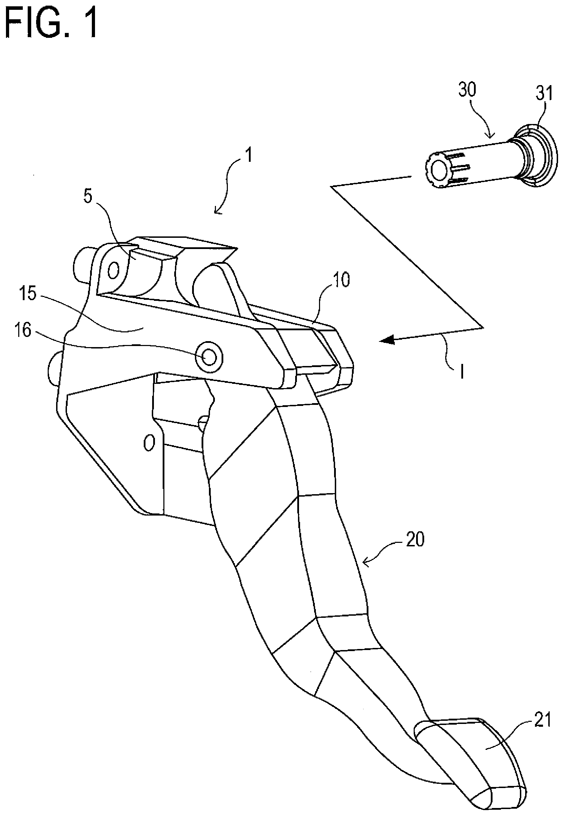

First, a schematic configuration of the operation pedal device 1 according to the first embodiment will be described in detail with reference to FIG.1. The operation pedal device 1 according to the first embodiment is securely arranged with respect to a dash panel etc. that partitions an engine room and a vehicle compartment and serving as a vehicle body member, and includes a pedal bracket 5, an operation pedal 20, and a pedal support shaft 30. When the operation pedal 20 is pivoted by depressing operation of the operation pedal 20, the operation pedal device 1 is configured to operate a clutch mounted on a vehicle by transmitting the pivoting of the operation pedal 20 to a clutch disconnection mechanism through a control cable or an oil hydraulic circuit (not illustrated).

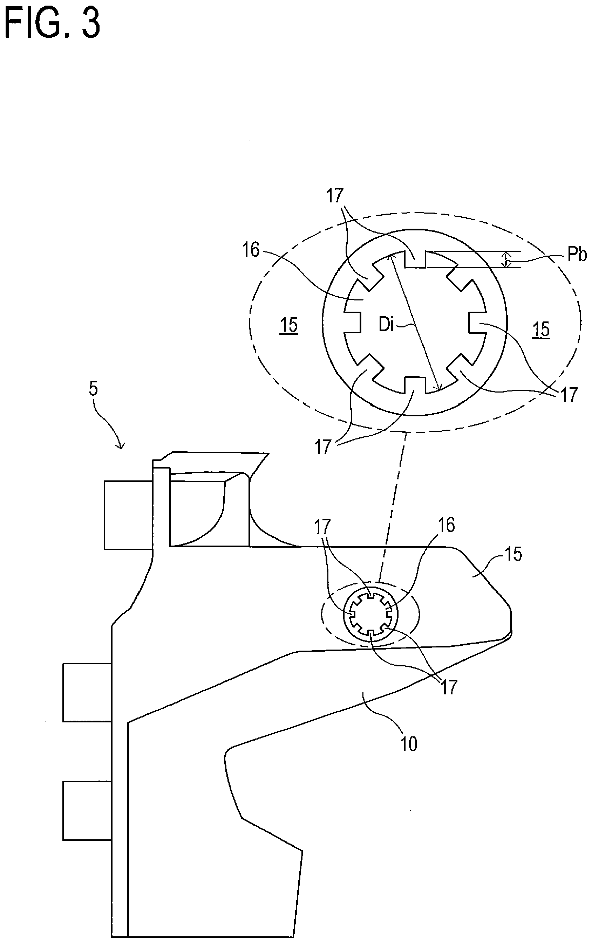

The pedal bracket 5 is made of synthetic resin (for example, PA66 nylon) and is fixed to a vehicle compartment side of the dash panel using a bolt etc. at a vehicle front portion. As illustrated in FIGs.1 and 3 etc., the pedal bracket 5 is configured by a first side plate 10 and a second side plate 15, the first side plate 10 having a substantially flat plate shape and extending toward a vehicle rear side and the second side plate 15 formed so as to face the first side plate 10 with a predetermined gap in a vehicle width direction. A specific configuration of the pedal bracket 5 will be described in detail with reference to the drawings.

The operation pedal 20 is made of synthetic resin (for example, PA66 nylon) and has an upper part pivotally supported by the pedal support shaft 30 between the first side plate 10 and the second side plate 15 of the pedal bracket 5. A depressing part 21 is formed on a lower end of the operation pedal 20 and is used for the depressing operation by a driver. When the depressing operation is performed by the depressing part 21 of the operation pedal 20, the operation pedal 20 pivots around the pedal support shaft 30 toward a vehicle front side.

The pedal support shaft 30 made of synthetic resin (for example, PA66 nylon) is formed as a shaft member having a substantially cylindrical shape and is arranged from the first side plate 10 to the second side plate 15 of the pedal bracket 5 so as to extend substantially horizontally and substantially parallel with the vehicle width direction. The pedal support shaft 30 is arranged with respect to the pedal bracket 5 in a predetermined insertion direction I (i.e. an insertion direction of inserting the pedal support shaft 30 into a first insertion hole 11 formed in the first side plate 10, the upper part of the operation pedal 20, and a second insertion hole 16 formed in the second side plate 15 in order) (see FIG.1). A specific configuration of the pedal support shaft 30 will be described in detail with reference to the drawings.

### (A schematic configuration of the pedal support shaft)

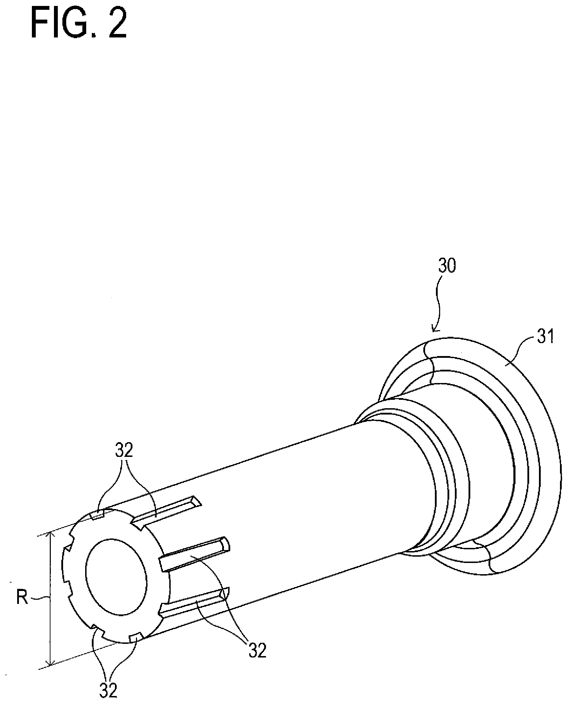

The specific configuration of the pedal support shaft 30 according to the first embodiment will be described in detail with reference to the drawings. The pedal support shaft 30 is made of synthetic resin (for example, PA66 nylon) and has a flange part 31 and a plurality of shaft side grooves 32, as illustrated in FIG.2. A shaft part of the pedal support shaft 30 has a substantially cylindrical shape using a predetermined support shaft reference outer diameter R as a diameter. The flange part 31 is formed so as to protrude toward outside in a radial direction from the shaft part of the pedal support shaft 30 at an end of the pedal support shaft 30 on an upstream side in the insertion direction I.

The plurality of shaft side grooves 32 are formed so as to be depressed from an outer peripheral surface of the pedal support shaft 30 toward an axial center at an end of the pedal support shaft 30 on a downstream side in the insertion direction I. The plurality of shaft side grooves 32 are formed with a fixed gap in a circumferential direction on the outer peripheral surface of the pedal support shaft 30 and have a groove shape extending along an axial direction of the pedal support shaft 30 (see FIG.2).

An area of a cross section inside the shaft side groove 32 orthogonal to the axial direction of the pedal support shaft 30 gradually increases toward the downstream side in the insertion direction I of the pedal support shaft 30. Specifically, in the first embodiment, a depth of each the shaft side groove 32 gradually deepens from the end on the upstream side toward the end on the downstream side in the insertion direction I. A width direction inside each the shaft side groove 32 has a fixed width regardless of the insertion direction I.

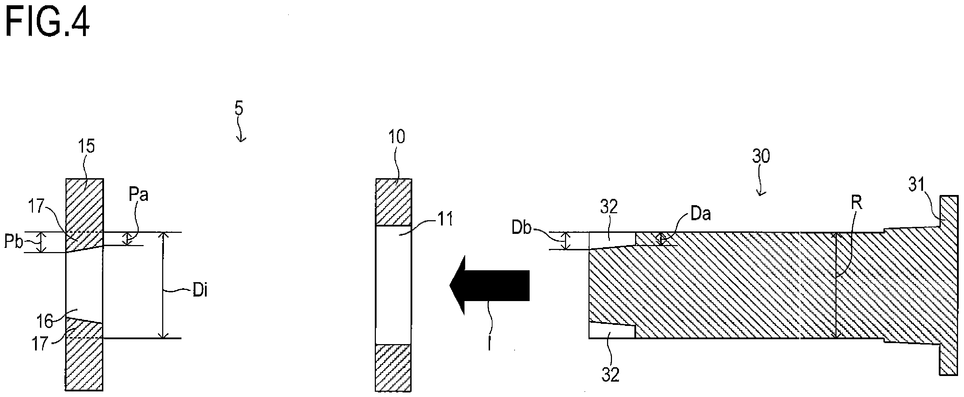

The depth on the end of each the shaft side groove 32 on the upstream side in the insertion direction I is a predetermined first groove depth Da, and the depth on the end on the downstream side in the insertion direction I is a second groove depth Db having a value larger than the first groove depth Da (see FIG.4 etc.). Accordingly, a bottom part of each the shaft side groove 32 has a tapered surface inclined toward the downstream side in the insertion direction I so as to approach the axial center.

### (A schematic configuration of the pedal bracket)

A specific configuration of the pedal bracket 5 according to the first embodiment will be described in detail with reference to the drawings. The pedal bracket 5 is made of synthetic resin (for example, PA66 nylon) and has the first side plate 10 and the second side plate 15 formed into substantially flat plate shapes that are extended toward the vehicle rear side and face with each other, as illustrated in FIGs.1 and 3.

The first side plate 10 is a side plate located on the upstream side in the insertion direction I of the pedal support shaft 30 of the pair of side plates of the pedal bracket 5 and extends toward the vehicle rear side. The first insertion hole 11 is formed in the first side plate 10, and when the upper part of the operation pedal 20 is pivotally supported with respect to the pedal bracket 5, the end of the pedal support shaft 30 on the upstream side in the insertion direction I (near the flange part 31) is inserted into the first insertion hole 11.

The second side plate 15 is a side plate located on the downstream side in the insertion direction I of the pedal support shaft 30 of the pair of side plates of the pedal bracket 5 and extends toward the vehicle rear side. The second side plate 15 is separated from the first side plate 10 with a predetermined distance (i.e. a width dimension at the upper part of the operation pedal 20).

The second insertion hole 16 is formed at a location facing the first insertion hole 11 of the first side plate 10, and a plurality of ridge parts 17 are formed in an inner peripheral surface of the second insertion hole 16. The second insertion hole 16 has an inner diameter being an insertion hole reference inner diameter Di substantially equal to the support shaft reference outer diameter R of the pedal support shaft 30. When the upper part of the operation pedal 20 is pivotally supported with respect to the pedal bracket 5, the end of the pedal support shaft 30 on the downstream side in the insertion direction I (a formed part of the shaft side groove 32) is pressed into the second insertion hole 16.

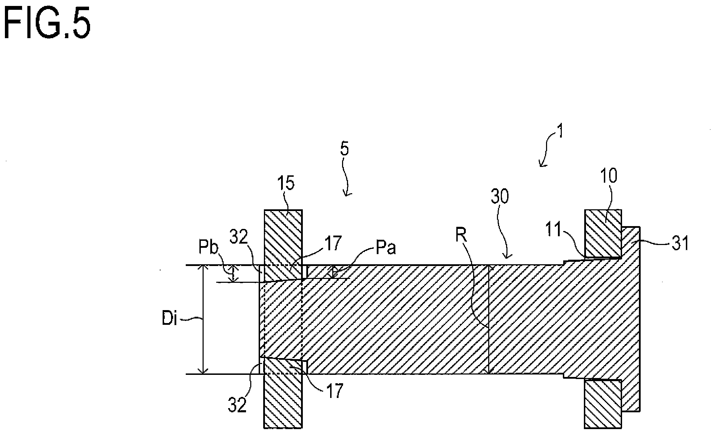

As illustrated in FIG.3, the plurality of the ridge parts 17 are formed so as to protrude from the inner peripheral surface of the second insertion hole 16 toward a center direction of the second insertion hole 16 on the inner peripheral surface of the second insertion hole 16 of the second side plate 15 and extend along a plate thickness direction of the second side plate 15. The plurality of ridge parts 17 are formed with a fixed gap in a circumferential direction on the inner peripheral surface of the second insertion hole 16 and correspond to each the shaft side groove 32 of the pedal support shaft 30 described above. Accordingly, when the pedal support shaft 30 is inserted into the second insertion hole 16, each the ridge part 17 is pressed into each the shaft side groove 32 of the pedal support shaft 30 (see FIG.5).

An area of a cross section of the ridge part 17 orthogonal to the plate thickness direction of the second side plate 15 gradually decreases toward the first side plate 10 in the plate thickness direction of the second side plate 15. In other words, the cross-sectional area of the ridge part 17 gradually increases toward the downstream side in the insertion direction I of the pedal support shaft 30. Specifically, in the first embodiment, a protrusion amount of each the ridge part 17 from the inner peripheral surface of the second insertion hole 16 gradually decreases toward the first side plate 10 in the plate thickness direction of the second side plate 15. A width direction of each the ridge part 17 has a fixed width regardless of the plate thickness direction of the second side plate 15.

The protrusion amounts of each the ridge part 17 from the inner peripheral surface of the second insertion hole 16 are a predetermined first protrusion amount Pa at an end of the ridge part 17 on the first side plate 10 side and a second protrusion amount Pb having a value larger than the first protrusion amount Pa at an end of the ridge part 17 outside the pedal bracket 5 (see FIGs.4 and 5). Accordingly, an end surface of each the ridge part 17 is a tapered surface inclined toward the first side plate 10 in the plate thickness direction of the second side plate 15 so as to be separated from the center of the second insertion hole 16.

In the first embodiment, the cross section of each the ridge part 17 in the second insertion hole 16 is slightly larger than the cross section of each the shaft side groove 32 in the pedal support shaft 30. Accordingly, when the pedal support shaft 30 is pressed into the second insertion hole 16, a surface of each the ridge part 17 press-contacts an inner surface of each the shaft side groove 32, firmly connecting the pedal support shaft 30 to the pedal bracket 5.

### (Attachment of the operation pedal to the pedal bracket)

Subsequently, an operation of pivotally attaching the operation pedal 20 to the pedal bracket 5 using the pedal support shaft 30 in the operation pedal device 1 according to the first embodiment will be described in detail with reference to FIGs.4 and 5.

FIG.4 is a cross-sectional diagram illustrating a state immediately before the operation pedal 20 is attached to the pedal bracket 5 using the pedal support shaft 30 in the operation pedal device 1 according to the first embodiment and FIG.5 is a cross-sectional diagram illustrating a state after the attachment operation. Both of FIGs.4 and 5 illustrate a cross section along the axial center of the pedal support shaft 30 and omit the operation pedal 20 for convenience sake. In both cases of FIGs.4 and 5, the upper part of the operation pedal 20 is arranged between the first side plate 10 and the second side plate 15 of the pedal bracket 5, and a support hole formed at the upper part of the operation pedal 20 is positioned on a straight line connecting the first insertion hole 11 of the first side plate 10 and the second insertion hole 16 of the second side plate 15.

In a state where the upper part of the operation pedal 20 is positioned between the first side plate 10 and the second side plate 15, the pedal support shaft 30 is inserted into the first side plate 10, the operation pedal 20, and the second side plate 15 in order from the first side plate 10 side according to the insertion direction I (see FIGs.1 and 4). As the pedal support shaft 30 is moved in the insertion direction I in a state where the first insertion hole 11 of the first side plate 10 and the support hole of the operation pedal 20 are inserted, the end of the pedal support shaft 30 is entering the second insertion hole 16 of the second side plate 15.

As described above, each the ridge part 17 of the second insertion hole 16 has the smallest cross-sectional area at the end on the first side plate 10 side in the plate thickness direction of the second side plate 15, and each the shaft side groove 32 of the pedal support shaft 30 has the largest inside cross-sectional area at the end on the downstream side in the insertion direction I (see Figs. 4 and 5). Accordingly, when the end of the pedal support shaft 30 is pressed into the second insertion hole 16, each the ridge part 17 of the second insertion hole 16 can easily enter each the shaft side groove 32 of the pedal support shaft 30.

The cross-sectional area of each the ridge part 17 of the second insertion hole 16 gradually decreases toward the first side plate 10 in the plate thickness direction of the second side plate 15, and the cross-sectional area inside each the shaft side groove 32 of the pedal support shaft 30 gradually increases toward the downstream side in the insertion direction I (see FIGs.4 and 5). Accordingly, as the pedal support shaft 30 is further moved in the insertion direction I, the surface of each the ridge part 17 of the second insertion hole 16 and the inner surface of each the shaft side groove 32 of the pedal support shaft 30 can be firmly press-contacted with each other, and thus the pedal support shaft 30 can be pressed into the first side plate 10 and the second side plate 15 of the pedal bracket 5 to be strongly connected with each other.

Thus, according to the operation pedal device 1 in the first embodiment, the operation pedal 20 can be pivotally supported with respect to the pedal bracket 5 using the pedal support shaft 30 through an operation of moving the pedal support shaft 30 to the first side plate 10 and the second side plate 15 of the pedal bracket 5 in the insertion direction I, improving workability of attaching the operation pedal 20 to the pedal bracket 5. Since each the ridge part 17 of the second insertion hole 16 is fitted into each the shaft side groove 32 of the pedal support shaft 30, according to the operation pedal device 1, the pedal support shaft 30 can be prevented from being rotated around its axis.

Next, a case where the operation pedal 20 is replaced in the operation pedal device 1 according to the first embodiment will be described. In this case, an operator removes the pedal support shaft 30 pivotally supporting the operation pedal 20 with respect to the pedal bracket 5. Specifically, the pedal support shaft 30 is pulled out of the pedal bracket 5 and the operation pedal 20 by moving the pedal support shaft 30 in a direction opposite to the insertion direction I with a force in consideration of connection between the pedal support shaft 30 and the second insertion hole 16.

According to the operation pedal device 1, even in the case where the operation pedal 20 is replaced, the operation pedal 20 and the pedal support shaft 30 can be removed from the pedal bracket 5 by only moving the pedal support shaft 30 in the direction opposite to the insertion direction I and pulling out the pedal support shaft 30, improving workability at the time of replacement of the operation pedal 20.

As described above, the vehicle operation pedal device 1 according to the first embodiment includes the pedal bracket 5 having the first side plate 10 and the second side plate 15, the operation pedal 20, and the pedal support shaft 30 made of synthetic resin and is configured to support the operation pedal 20 pivotally around the pedal support shaft 30 with respect to the pedal bracket 5. In the operation pedal device 1, the pedal support shaft 30 is inserted into the first insertion hole 11 formed in the first side plate 10 and is pressed into the second insertion hole 16 formed in the second side plate 15 (see FIG.5). Namely, according to the operation pedal device 1, the pedal support shaft 30 can be pressed into the second insertion hole 16 by inserting the pedal support shaft 30 into the first insertion hole 11 of the first side plate 10, the operation pedal 20, and the second insertion hole 16 of the second side plate 15 in order, firmly connecting the pedal support shaft 30 to the pedal bracket 5 (see FIGs.4 and 5).

In the first embodiment, the plurality of shaft side grooves 32 are formed at the end of the pedal support shaft 30 (see FIG.2), and each the ridge part 17 formed in the second insertion hole 16 of the second side plate 15 is pressed into each the shaft side groove 32. Accordingly, according to the operation pedal device 1, since a portion press-contacting with each other can be increased by cooperation of each the shaft side groove 32 of the pedal support shaft 30 and each the ridge part 17 of the second insertion hole 16, the pedal support shaft 30 can be attached to the pedal bracket 5 more firmly. According to the operation pedal device 1, even in the case where the pedal support shaft 30 is removed from the pedal bracket 5 for replacement of the operation pedal 20 etc., pulling out the pedal support shaft 30 is only needed and thus work efficiency in this case can be also improved.

As illustrated in FIGs.4 and 5, each the shaft side groove 32 according to the first embodiment is formed so as to have the largest area of the cross section inside the shaft side groove 32 orthogonal to the axial direction of the pedal support shaft 30 at the end of the pedal support shaft 30 on the downstream side in the insertion direction I. Therefore, according to the operation pedal device 1, when the end of the pedal support shaft 30 is pressed into the second insertion hole 16, the ridge parts 17 can easily enter the shaft side grooves 32, improving the workability of attaching the pedal support shaft 30 to the pedal bracket 5. According to the operation pedal device 1, since the cross-sectional area inside the shaft side groove 32 gradually increases toward the downstream side in the insertion direction I of the pedal support shaft 30 into the second insertion hole 16, as the pedal support shaft 30 is further inserted into the second insertion hole 16, the inner surface of the shaft side groove 32 and the ridge part 17 can be more firmly press-contacted with each other, easily realizing a desired degree of press-in.

The ridge part 17 according to the first embodiment is formed so as to have the smallest area of the cross section orthogonal to the plate thickness direction of the second side plate 15 at the end of the first side plate 10 in the plate thickness direction of the second side plate 15 (see FIGs.4 and 5). Therefore, when the end of the pedal support shaft 30 is pressed into the second insertion hole 16, the ridge parts 17 can easily enter the shaft side grooves 32 of the pedal support shaft 30, improving the workability of attaching the pedal support shaft 30 to the pedal bracket 5. According to the operation pedal device 1, since the area of the cross section of the ridge part 17 orthogonal to the plate thickness direction gradually decreases toward the first side plate 10 in the plate thickness direction of the second side plate 15, as the pedal support shaft 30 is further inserted into the second insertion hole 16, the ridge part 17 and the inner surface of the shaft side groove 32 can be more firmly press-contacted with each other, easily realizing the desired degree of press-in.

### (Second Embodiment)

The operation pedal device 1 according to an embodiment (the second embodiment) different from the first embodiment will be described in detail with reference to the drawings. The operation pedal device 1 according to the second embodiment has the same configuration as the operation pedal device 1 according to the first embodiment 1 except for the configurations of the first insertion hole 11 and the pedal support shaft 30. Accordingly, in the description below, the configurations same as the first embodiment will be omitted, and only different configurations will be described in detail.

### (Schematic configuration of the operation pedal device according to the second embodiment)

The operation pedal device 1 according to the second embodiment is securely arranged with respect to the dash panel etc. serving as the vehicle body member, and includes the pedal bracket 5, the operation pedal 20, and the pedal support shaft 30 as in the case with the first embodiment. In the operation pedal device 1, the operation pedal 20 is also pivotally supported by the pedal support shaft 30 between the first side plate 10 and the second side plate 15 of the pedal bracket 5.

### (Schematic configuration of the pedal support shaft according to the second embodiment)

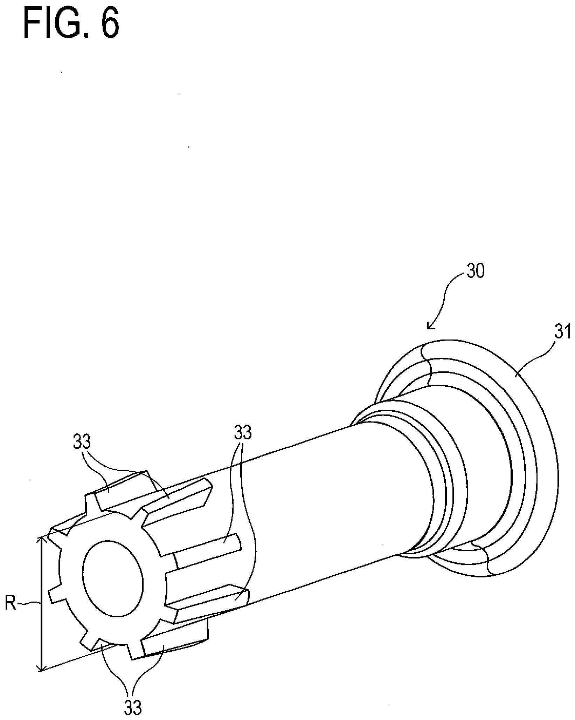

Next, a specific configuration of the pedal support shaft 30 used for the operation pedal device 1 according to the second embodiment will be described in detail with reference to the drawings. The pedal support shaft 30 according to the second embodiment is also made of synthetic resin (for example, PA66 nylon) as in the case with the first embodiment and has the flange part 31 and a plurality of shaft side ridge parts 33, as illustrated in FIG.6. The shaft part of the pedal support shaft 30 has the substantially cylindrical shape using the predetermined support shaft reference outer diameter R as the diameter. The flange part 31 is formed so as to protrude toward the outside in the radial direction from the shaft part of the pedal support shaft 30 at the end of the pedal support shaft 30 on the upstream side in the insertion direction I.

The plurality of shaft side ridge parts 33 are formed so as to protrude toward the outside in the radial direction from the outer peripheral surface of the pedal support shaft 30 at the end of the pedal support shaft 30 on the downstream side in the insertion direction I. The plurality of shaft side ridge parts 33 are formed with a fixed gap in the circumferential direction on the outer peripheral surface of the pedal support shaft 30 and extend along the axial direction of the pedal support shaft 30 (see FIG.6).

An area of a cross section of each the shaft side ridge part 33 orthogonal to the axial direction of the pedal support shaft 30 gradually decreases toward the downstream side in the insertion direction I of the pedal support shaft 30 into the second insertion hole 16. Specifically, in the second embodiment, a height of each the shaft side ridge part 33 (i.e. a protrusion amount from the outer peripheral surface of the pedal support shaft 30) gradually decreases from the upstream side toward the end on the downstream side in the insertion direction I. A width direction of each the shaft side ridge part 33 has a fixed width regardless of the insertion direction I.

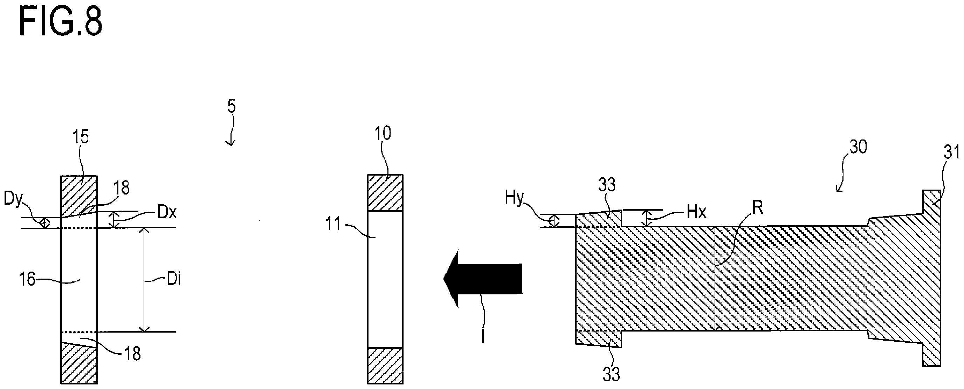

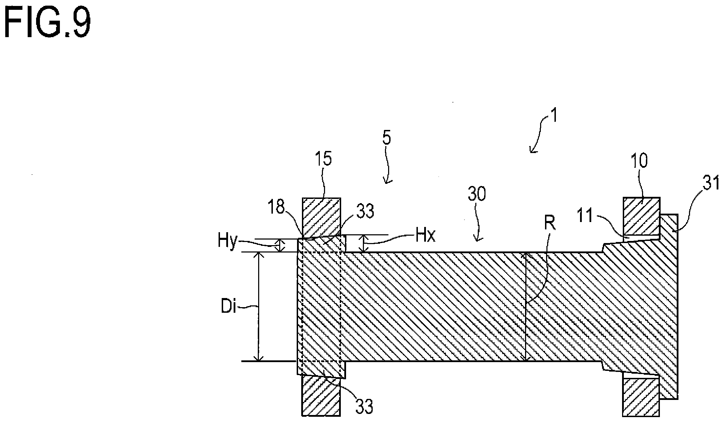

The height of each the shaft side ridge part 33 at an end on the upstream side in the insertion direction I is a predetermined first ridge height Hx, and the height at an end on the downstream side in the insertion direction I is a second ridge height Hy having a value smaller than the first ridge height Hx (see FIGs.8 and 9). Accordingly, an end surface of each the shaft side ridge part 33 is a tapered surface inclined toward the downstream side in the insertion direction I so as to approach the axial center.

### (Schematic configuration of the pedal bracket according to the second embodiment)

Next, a specific configuration of the pedal bracket 5 configuring the operation pedal device 1 according to the second embodiment will be described in detail with reference to the drawings. The pedal bracket 5 according to the second embodiment is made of synthetic resin (for example, PA66 nylon) and has the first side plate 10 and the second side plate 15 formed into substantially flat shapes that are extended toward the vehicle rear side and face with each other, as in the case with the first embodiment. The first insertion hole 11 inserted by the pedal support shaft 30 is formed in the first side plate 10, and the second insertion hole 16 pressed into by the end of the pedal support shaft 30 is formed in the second side plate 15.

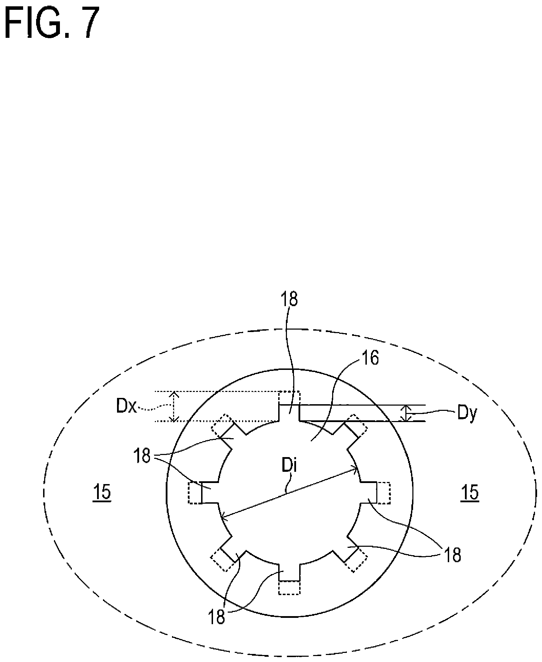

The second insertion hole 16 is formed at the location facing the first insertion hole 11 of the first side plate 10 in the second side plate 15, and a plurality of fixed grooves 18 are formed on the inner peripheral surface of the second insertion hole 16 (see FIG.7). The second insertion hole 16 has the inner diameter being the insertion hole reference inner diameter Di substantially equal to the support shaft reference outer diameter R of the pedal support shaft 30 as in the case with the first embodiment.

As illustrated in FIGs.7 and 8, the plurality of fixed grooves 18 are formed so as to be depressed from the inner peripheral surface of the second insertion hole 16 toward the outside in a radial direction on the inner peripheral surface of the second insertion hole 16 in the second side plate 15 and extend along the plate thickness direction of the second side plate 15. The plurality of fixed grooves 18 are formed with a fixed gap in the circumferential direction on the inner peripheral surface of the second insertion hole 16 and correspond to each the shaft side ridge part 33 of the pedal support shaft 30 described above. Accordingly, when the pedal support shaft 30 is inserted into the second insertion hole 16, each the shaft side ridge part 33 of the pedal support shaft 30 is pressed into each the fixed groove 18 (see FIG.9).

An area of a cross section inside each the fixed groove 18 orthogonal to the plate thickness direction of the second side plate 15 gradually increases toward the first side plate 10 in the plate thickness direction of the second side plate 15 (see FIG.8). Specifically, in the second embodiment, a depth of the fixed groove 18 from the inner peripheral surface of the second insertion hole 16 gradually increases toward the first side plate 10 in the plate thickness direction of the second side plate 15. A width direction of each the fixed groove 18 has a fixed width regardless of the plate thickness direction of the second side plate 15.

The depth of each the fixed groove 18 from the inner peripheral surface of the second insertion hole 16 is a predetermined first fixed groove depth Dx at an end of the fixed groove 18 on the first side plate 10 side and a second fixed groove depth Dy having a value smaller than the first fixed groove depth Dx at an end of the fixed groove 18 outside the pedal bracket 5 (see FIGs.7-9). Accordingly, a bottom surface of each the fixed groove 18 is a tapered surface inclined toward the first side plate 10 side in the plate thickness direction of the second side plate 15 so as to be separated from the center of the second insertion hole 16.

In the second embodiment, the cross-sectional area of each the shaft side ridge part 33 in the pedal support shaft 30 is slightly larger than the cross-sectional area of each the fixed groove 18 in the second insertion hole 16. Accordingly, when the pedal support shaft 30 is pressed into the second insertion hole 16, a surface of each the shaft side ridge part 33 is press-contacted with an inner surface of each the fixed groove 18, strongly connecting the pedal support shaft 30 to the pedal bracket 5.

### (Attachment of the operation pedal to the pedal bracket according to the second embodiment)

Subsequently, an operation of pivotally attaching the operation pedal 20 to the pedal bracket 5 using the pedal support shaft 30 in the operation pedal device 1 according to the second embodiment will be described in detail with reference to FIGs.8 and 9.

FIG.8 is a cross-sectional diagram illustrating a state immediately before the operation pedal 20 is attached to the pedal bracket 5 using the pedal support shaft 30 in the operation pedal device 1 according to the second embodiment and FIG.9 is a cross-sectional diagram illustrating a state after the attachment operation. Both of FIGs.8 and 9 illustrate a cross section along the axial center of the pedal support shaft 30 and omit the operation pedal 20 for convenience sake. In both cases of FIGs.8 and 9, the upper part of the operation pedal 20 is arranged between the first side plate 10 and the second side plate 15 of the pedal bracket 5, and the support hole formed at the upper part of the operation pedal 20 is positioned on the straight line connecting the first insertion hole 11 of the first side plate 10 and the second insertion hole 16 of the second side plate 15.

In the second embodiment, in a state where the upper part of the operation pedal 20 is positioned between the first side plate 10 and the second side plate 15, the pedal support shaft 30 is also inserted into the first side plate 10, the operation pedal 20, and the second side plate 15 from the first side plate 10 side according to the insertion direction I. (see FIG.8). As the pedal support shaft 30 is moved in the insertion direction I in a state where the first insertion hole 11 of the first side plate 10 and the support hole of the operation pedal 20 are inserted, the end of the pedal support shaft 30 is entering the second insertion hole 16 of the second side plate 15.

As described above, the cross-sectional area inside each the fixed groove 18 of the second insertion hole 16 is the largest at the end on the first side plate 10 side in the plate thickness direction of the second side plate 15, and the cross-sectional area of each the shaft side ridge part 33 of the pedal support shaft 30 is the smallest at the end on the downstream side in the insertion direction I (see FIGs.8 and 9). Accordingly, when the end of the pedal support shaft 30 is pressed into the second insertion hole 16, each the shaft side ridge part 33 of the pedal support shaft 30 can easily enter each the fixed groove 18 of the second insertion hole 16.

The cross-sectional area inside each the fixed groove 18 of the second insertion hole 16 gradually increases toward the first side plate 10 side in the plate thickness direction of the second side plate 15, and the cross-sectional area of each the shaft side ridge part 33 of the pedal support shaft 30 gradually decreases toward the downstream side in the insertion direction I (see FIGs.8 and 9). Accordingly, as the pedal support shaft 30 is further moved in the insertion direction I, the inner surface of each the fixed groove 18 of the second insertion hole 16 and the surface of each the shaft side ridge part 33 of the pedal support shaft 30 can be more strongly press-contacted with each other, and thus the pedal support shaft 30 can be pressed into the first side plate 10 and the second side plate 15 of the pedal bracket 5 to be strongly connected with each other.

Thus, according to the operation pedal device 1 in the second embodiment, the operation pedal 20 can be pivotally supported by the pedal bracket 5 using the pedal support shaft 30 through the operation of moving the pedal support shaft 30 to the first side plate 10 and the second side plate 15 of the pedal bracket 5 in the insertion direction I, improving workability of attaching the operation pedal 20 to the pedal bracket 5 as in the case with the first embodiment. Since each the shaft side ridge part 33 of the pedal support shaft 30 is fitted into each the fixed groove 18 of the second insertion hole 16, the pedal support shaft 30 can be prevented from being rotated around its axis.

Next, the case where the operation pedal 20 is replaced in the operation pedal device 1 according to the second embodiment will be described. In this case, the operator removes the pedal support shaft 30 pivotally supporting the operation pedal 20 with respect to the pedal bracket 5. Specifically, the operator pulls out the pedal support shaft 30 from the pedal bracket 5 and the operation pedal 20 by moving the pedal support shaft 30 in the direction opposite to the insertion direction I with a force in consideration of connection between the pedal support shaft 30 and the second insertion hole 16.

According to the operation pedal device 1, even in the case where the operation pedal 20 is replaced, the operation pedal 20 and the pedal support shaft 30 can be removed from the pedal bracket 5 by only moving the pedal support shaft 30 in the direction opposite to the insertion direction I and pulling out the pedal support shaft 30, and thus the work efficiency at the time of replacement of the operation pedal 20 can be improved.

As described above, the operation pedal device 1 according to the second embodiment includes the pedal bracket 5 having the first side plate 10 and the second side plate 15, the operation pedal 20, and the pedal support shaft 30 made of synthetic resin and is configured to support the operation pedal 20 pivotally around the pedal support shaft 30 with respect to the pedal bracket 5. In the operation pedal device 1, the pedal support shaft 30 is inserted into the first insertion hole 11 formed in the first side plate 10 and pressed into the second insertion hole 16 formed in the second side plate 15 (see FIG.9). Namely, according to the operation pedal device 1, the pedal support shaft 30 can be pressed into the second insertion hole 16 by inserting the pedal support shaft 30 into the first insertion hole 11 of the first side plate 10, the operation pedal 20, and the second insertion hole 16 of the second side plate 15 in order, firmly connecting the pedal support shaft 30 to the pedal bracket 5 (see FIGs.8 and 9).

In the second embodiment, the plurality of shaft side ridge parts 33 are formed at the end of the pedal support shaft 30 (see FIG.6), and each the shaft side ridge part 33 is pressed into each the fixed groove 18 formed in the second insertion hole 16 of the second side plate 15. Accordingly, according to the operation pedal device 1, since a portion press-contacting with each other can be increased by cooperation of each the shaft side ridge part 33 of the pedal support shaft 30 and each the fixed groove 18 of the second insertion hole 16, the pedal support shaft 30 can be attached to the pedal bracket 5 more firmly. According to the operation pedal device 1, even in the case where the pedal support shaft 30 is removed from the pedal bracket 5 for replacement of the operation pedal 20 etc., pulling out the pedal support shaft 30 is only needed and thus the work efficiency in this case can be also improved.

As illustrated in FIGs.8 and 9, in the second embodiment, the area of the cross section of each the shaft side ridge part 33 orthogonal to the axial direction of the pedal support shaft 30 is the smallest at the end of the pedal support shaft 30 on the downstream side in the insertion direction I. Accordingly, according to the operation pedal device 1, when the end of the pedal support shaft 30 is pressed into the second insertion hole 16, the shaft side ridge parts 33 can easily enter the fixed grooves 18, and thus the workability of attaching the pedal support shaft 30 to the pedal bracket 5 can be improved. According to the operation pedal device 1, since the cross-sectional area of the shaft side ridge part 33 gradually decreases toward the downstream side in the insertion direction I of the pedal support shaft 30 into the second insertion hole 16, as the pedal support shaft 30 is further inserted into the second insertion hole 16, the shaft side ridge part 33 and an inner surface of the fixed groove 18 can be more firmly press-contacted with each other, easily realizing the desired degree of press-in.

In the second embodiment, the area of the cross section inside the fixed groove 18 orthogonal to the plate thickness direction of the second side plate 15 is the largest at the end of the first side plate 10 in the plate thickness direction of the second side plate 15 (see FIGs.8 and 9). Accordingly, when the end of the pedal support shaft 30 is pressed into the second insertion hole 16, the shaft side ridge parts 33 of the pedal support shaft 30 can easily enter the fixed grooves 18 of the second insertion hole 16, and thus the workability of attaching the pedal support shaft 30 to the pedal bracket 5 can be improved. According to the operation pedal device 1, since the area of the cross section inside the fixed groove 18 orthogonal to the plate thickness direction gradually increases toward the first side plate 10 in the plate thickness direction of the second side plate 15, as the pedal support shaft 30 is further inserted into the second insertion hole 16, the inner surface of the fixed groove 18 and the shaft side ridge part 33 can be more firmly press-contacted with each other, easily realizing the desired degree of press-in.

### (Third Embodiment)

Subsequently, a schematic configuration of the operation pedal device 1 according to the embodiment (the third embodiment) different from the above-mentioned first embodiment and second embodiment will be described in detail with reference to the drawings. The operation pedal device 1 according to the third embodiment has the configuration same as the operation pedal device 1 according to the above-mentioned first embodiment and second embodiment except for the configurations of the first insertion hole 11 and the pedal support shaft 30. Accordingly, in the description below, the description of the configurations same as the first embodiment and the second embodiment will be omitted and different configurations will be described in detail.

### (Schematic configuration of the operation pedal device according to the third embodiment)

The operation pedal device 1 according to the third embodiment is securely arranged with respect to the dash panel etc. serving as the vehicle body member as in the case with the first embodiment and the second embodiment, and includes the pedal bracket 5, the operation pedal 20, and the pedal support shaft 30 as in the case with the first embodiment. In the operation pedal device 1, the operation pedal 20 is also pivotally supported by the pedal support shaft 30 between the first side plate 10 and the second side plate 15 of the pedal bracket 5.

### (Schematic configuration of the pedal support shaft according to the third embodiment)

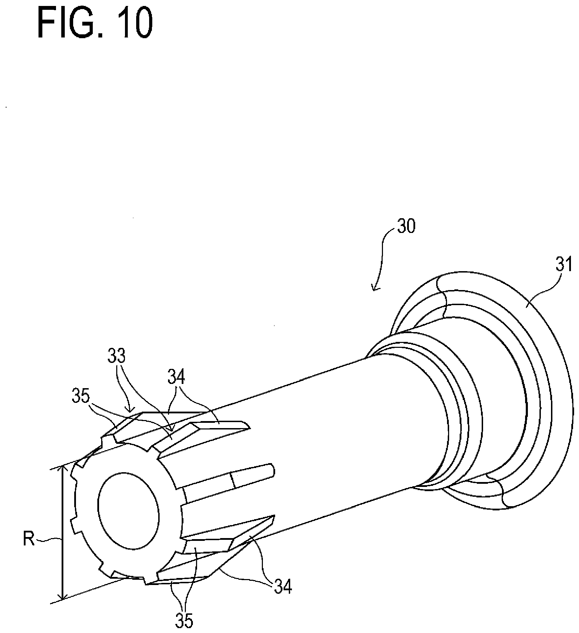

Next, a specific configuration of the pedal support shaft 30 used for the operation pedal device 1 according to the third embodiment will be described in detail with reference to the drawings. The pedal support shaft 30 according to the third embodiment is also made of synthetic resin (for example, PA66 nylon) as in the cases with the first embodiment and the second embodiment and has the flange part 31 and the plurality of shaft side ridge parts 33, as illustrated in FIG.10. The shaft part of the pedal support shaft 30 has the substantially cylindrical shape using the predetermined support shaft reference outer diameter R as the diameter. The flange part 31 is formed so as to protrude toward the outside in the radial direction from the shaft part of the pedal support shaft 30 at the end of the pedal support shaft 30 on the upstream side in the insertion direction I.

In the third embodiment, the plurality of shaft side ridge parts 33 are also formed so as to protrude toward the outside in the radial direction from the outer peripheral direction of the pedal support shaft 30 at the end of the pedal support shaft 30 on the downstream side in the insertion direction I. The plurality of shaft side ridge parts 33 are formed with a fixed gap in the circumferential direction on the outer peripheral surface of the pedal support shaft 30 and extend along the axial direction of the pedal support shaft 30 (see FIG.10).

The shaft side ridge part 33 according to the third embodiment includes a first ridge part 34 configuring an upstream side part in the insertion direction I in the shaft side ridge part 33 and a second ridge part 35 configuring a downstream side part in the insertion direction I in the shaft side ridge part 33. The first ridge part 34 in each the shaft side ridge part 33 is formed so that the area of the cross section of the shaft side ridge part 33 orthogonal to the axial direction of the pedal support shaft 30 gradually increases toward the downstream side in the insertion direction I of the pedal support shaft 30 into the second insertion hole 16. Specifically, in the third embodiment, a height of each the first ridge part 34 (i.e. protrusion amount from the outer peripheral surface of the pedal support shaft 30) gradually increases from the upstream side toward an end on the downstream side in the insertion direction I. A width direction of each the first ridge part 34 has a fixed width regardless of the insertion direction I.

The height of each the first ridge part 34 at an end on the upstream side in the insertion direction I is a predetermined first ridge height Hx, and the height of the first ridge part 34 at the end on the downstream side in the insertion direction I is a second ridge height Hy having a value larger than the first ridge height Hx (see FIGs.10, 12 and 13). Accordingly, an end surface of the first ridge part 34 in each the shaft side ridge part 33 is a tapered surface inclined toward the downstream side in the insertion direction I so as to be separated from the axial center.

The second ridge part 35 in each the shaft side ridge part 33 is formed continuously with the first ridge part 34 on the downstream side of the first ridge part 34 in the insertion direction I. An area of a cross section of the second ridge part 35 orthogonal to the axial direction of the pedal support shaft 30 gradually decreases toward the downstream side in the insertion direction I of the pedal support shaft 30 into the second insertion hole 16. Specifically, a height of each the second ridge part 35 (i.e. protrusion amount from the outer peripheral surface of the pedal support shaft 30) gradually decreases from the upstream side toward the end on the downstream side in the insertion direction I. A width direction of each the second ridge part 35 has a fixed width regardless of the insertion direction I as in the case with the first ridge part 34.

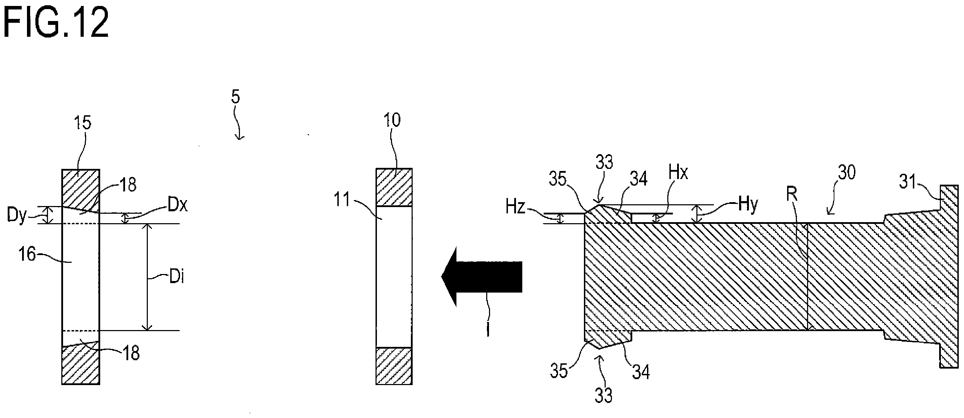

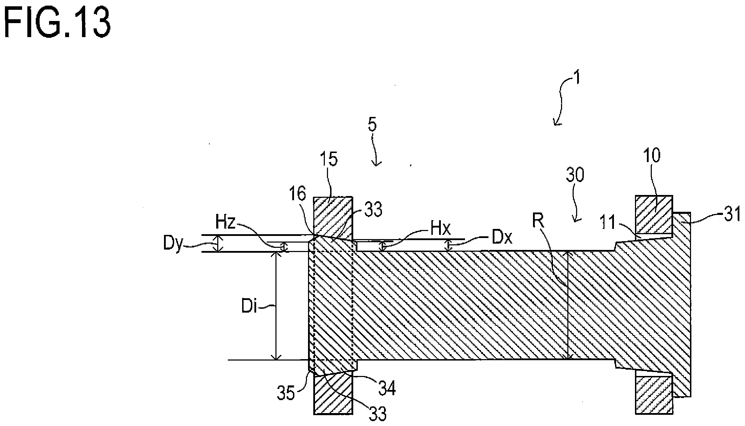

Since the height of each the second ridge part 35 at an end on the upstream side in the insertion direction I is equal to the end of the first ridge part 34 on the downstream side, the height is the second ridge height Hy, and the height of each the second ridge part 35 at an end on the downstream side in the insertion direction I is a third ridge height Hz having a value smaller than the second ridge height Hy (see FIGs.12 and 13). Accordingly, an end surface of each the second ridge part 35 is a tapered surface inclined toward the downstream side in the insertion direction I so as to approach the axial center.

### (Schematic configuration of the pedal bracket according to the third embodiment)

Next, a specific configuration of the pedal bracket 5 configuring the operation pedal device 1 according to the third embodiment will be described in detail with reference to the drawings. The pedal bracket 5 according to the third embodiment is made of synthetic resin (for example, PA66 nylon) and has the first side plate 10 and the second side plate 15 formed into substantially flat shapes that are extended toward the vehicle rear side and face with each other, as in the cases with the first embodiment and the second embodiment. The first insertion hole 11 inserted by the pedal support shaft 30 is formed in the first side plate 10, and the second insertion hole 16 pressed into by the end of the pedal support shaft 30 is formed in the second side plate 15.

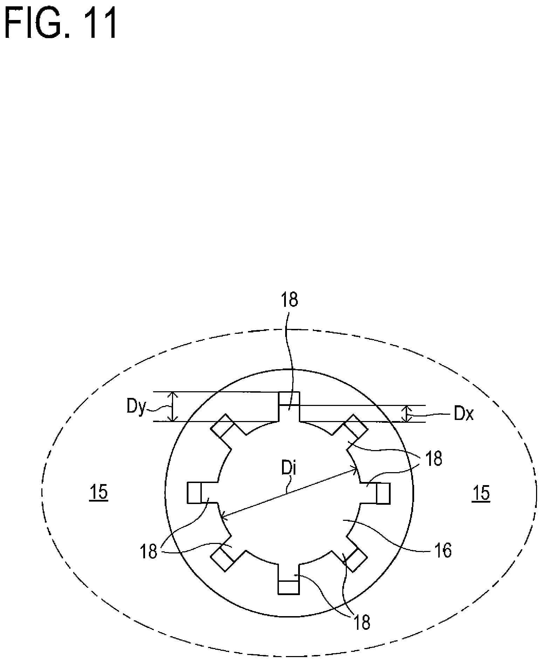

In the third embodiment, the second insertion hole 16 is also formed at the location facing the first insertion hole 11 of the first side plate 10 in the second side plate 15, and the plurality of fixed grooves 18 are formed on the inner peripheral surface of the second insertion hole 16 (see FIG.11). The second insertion hole 16 has the inner diameter being the insertion hole reference inner diameter Di substantially equal to the support shaft reference outer diameter R of the pedal support shaft 30 as in the cases with the first embodiment and the second embodiment.

As illustrated in FIGs.11 and 12, the plurality of fixed grooves 18 are formed so as to be depressed from the inner peripheral surface of the second insertion hole 16 toward the outside in the radial direction on the inner peripheral surface of the second insertion hole 16 of the second side plate 15 and extend along the plate thickness direction of the second side plate 15. The plurality of fixed grooves 18 are formed with a fixed gap in the circumferential direction on the inner peripheral surface of the second insertion hole 16 and correspond to each the shaft side ridge part 33 of the pedal support shaft 30 described above. Accordingly, when the pedal support shaft 30 is inserted into the second insertion hole 16, each the shaft side ridge part 33 of the pedal support shaft 30 is pressed into each the fixed groove 18 (see FIG.13).

The area of the cross section inside each the fixed groove 18 orthogonal to the plate thickness direction of the second side plate 15 gradually decreases toward the first side plate 10 in the plate thickness direction of the second side plate 15 (see FIGs.11 and 12). Specifically, in the third embodiment, the depth of the fixed groove 18 from the inner peripheral surface of the second insertion hole 16 gradually decreases toward the first side plate 10 in the plate thickness direction of the second side plate 15. The width direction of each the fixed groove 18 has a fixed width regardless of the plate thickness direction of the second side plate 15.

The depth of each the fixed groove 18 from the inner peripheral surface of the second insertion hole 16 is a predetermined first fixed groove depth Dx at the end of the fixed groove 18 on the first side plate 10 side and a second fixed groove depth Dy having a value larger than the first fixed groove depth Dx at the end of the fixed groove 18 outside the pedal bracket 5 (see FIGs.11-13). Accordingly, the bottom surface of each the fixed groove 18 is a tapered surface inclined toward the first side plate 10 side in the plate thickness direction of the second side plate 15 so as to approach the center of the second insertion hole 16.

In the third embodiment, the cross-sectional area of each the shaft side ridge part 33 in the pedal support shaft 30 is slightly larger than the cross-sectional area of each the fixed groove 18 in the second insertion hole 16. Accordingly, when the pedal support shaft 30 is pressed into the second insertion hole 16, the surface of each the shaft side ridge part 33 is press-contacted with the inner surface of each the fixed groove 18, and thus the pedal support shaft 30 can be strongly connected to the pedal bracket 5.

### (Attachment of the operation pedal to the pedal bracket according to the third embodiment)

Next, an operation of pivotally attaching the operation pedal 20 to the pedal bracket 5 using the pedal support shaft 30 in the operation pedal device 1 according to the third embodiment will be described in detail with reference to FIGs.12 and 13.

FIG.12 is a cross-sectional diagram illustrating a state immediately before the operation pedal 20 is attached to the pedal bracket 5 using the pedal support shaft 30 in the operation pedal device 1 according to the third embodiment and FIG.13 is a cross-sectional diagram illustrating a state after the attachment operation. Both of FIGs.12 and 13 illustrate a cross section along the axial center of the pedal support shaft 30 and omit the operation pedal 20 for convenience sake. In both cases of FIGs.12 and 13, the upper part of the operation pedal 20 is arranged between the first side plate 10 and the second side plate 15 of the pedal bracket 5, and the support hole formed at the upper part of the operation pedal 20 is positioned on the straight line connecting the first insertion hole 11 of the first side plate 10 and the second insertion hole 16 of the second side plate 15.

In the third embodiment, in a state where the upper part of the operation pedal 20 is positioned between the first side plate 10 and the second side plate 15, the pedal support shaft 30 is inserted into the first side plate 10, the operation pedal 20, and the second side plate 15 from the first side plate 10 side according to the insertion direction I. (see FIG. 12). As the pedal support shaft 30 is moved in the insertion direction I in a state where the first insertion hole 11 of the first side plate 10 and the support hole of the operation pedal 20 are inserted, the end of the pedal support shaft 30 is entering the second insertion hole 16 of the second side plate 15.

As described above, in each the shaft side ridge part 33 of the pedal support shaft 30, the second ridge part 35 is formed on the downstream side in the insertion direction I so as to have the smallest cross-sectional area at the end on the downstream side in the insertion direction I (see FIGs.11 and 12). Accordingly, when the end of the pedal support shaft 30 is pressed into the second insertion hole 16, each the second ridge part 35 of the pedal support shaft 30 can easily enter each the fixed groove 18 of the second insertion hole 16, thereby facilitating press-in of the shaft side ridge parts 33 into each the fixed grooves 18.

Thus, according to the operation pedal device 1 in the third embodiment, the operation pedal 20 can be pivotally supported by the pedal bracket 5 using the pedal support shaft 30 through the operation of moving the pedal support shaft 30 to the first side plate 10 and the second side plate 15 of the pedal bracket 5 in the insertion direction I, improving workability of attachment of the operation pedal 20 to the pedal bracket 5 as in the cases with the first embodiment and the second embodiment. Since each the shaft side ridge part 33 of the pedal support shaft 30 is fitted into each the fixed groove 18 of the second insertion hole 16, the pedal support shaft 30 can be prevented from being rotated around its axis.

Next, the case where the operation pedal 20 is replaced in the operation pedal device 1 according to the third embodiment will be described. In this case, the operator removes the pedal support shaft 30 pivotally supporting the operation pedal 20 with respect to the pedal bracket 5. Specifically, the operator pulls out the pedal support shaft 30 from the pedal bracket 5 and the operation pedal 20 by moving the pedal support shaft 30 in the direction opposite to the insertion direction I with a force in consideration of connection between the pedal support shaft 30 and the second insertion hole 16.

According to the operation pedal device 1, even in the case where the operation pedal 20 is replaced, the operation pedal 20 and the pedal support shaft 30 can be removed from the pedal bracket 5 by only moving the pedal support shaft 30 in the direction opposite to the insertion direction I and pulling out the pedal support shaft 30, improving workability at the time of replacement of the operation pedal 20.

In the third embodiment, the cross-sectional area inside each the fixed groove 18 of the second insertion hole 16 gradually decreases toward the first side plate 10 in the plate thickness direction of the second side plate 15, and in each the shaft side ridge part 33 of the pedal support shaft 30, the cross-sectional area of the first ridge part 34 gradually increases toward the downstream side in the insertion direction I (see FIGs.12 and 13). Therefore, as the pedal support shaft 30 is further moved in the direction opposite to the insertion direction I (i.e. a direction of pulling out of the first insertion hole 11 and the second insertion hole 16), the bottom surface of each the fixed groove 18 of the second insertion hole 16 is more firmly press-contacted with the end surface of the first ridge part 34 in each the shaft side ridge part 33 of the pedal support shaft 30. At this time, a force generated by contact between the bottom surface of the fixed groove 18 and the end surface of the first ridge part 34 has a component in the insertion direction I in opposition to the operator's pulling out action.

Namely, according to the operation pedal device 1 in the third embodiment, even in a case where a load in the direction of pulling out the pedal support shaft 30 from the second insertion hole 16 accidentally works on the pedal support shaft 30, a load opposite to the pulling out direction can be made to work on the pedal support shaft 30 by cooperation of the end surface of the first ridge part 34 and the inner surface of the fixed groove 18, and thus the pedal support shaft 30 can be prevented from being accidentally pulled out of the pedal bracket 5 and the operation pedal 20.

When the pedal support shaft 30 is removed from the pedal bracket 5 for replacement of the operation pedal 20 etc., pulling out the pedal support shaft 30 is only needed after a larger force in consideration of a load generated by cooperation of the first ridge part 34 and the inner surface of the fixed groove 18 is worked on the pedal support shaft 30, and thus work efficiency can be also improved in this case.

As described above, as in the case with the first embodiment and the second embodiment, the operation pedal device 1 according to the third embodiment includes the pedal bracket 5 having the first side plate 10 and the second side plate 15, the operation pedal 20, and the pedal support shaft 30 made of synthetic resin and is configured to support the operation pedal 20 pivotally around the pedal support shaft 30 with respect to the pedal bracket 5. In the operation pedal device 1, the pedal support shaft 30 is inserted into the first insertion hole 11 formed in the first side plate 10 and pressed into the second insertion hole 16 formed in the second side plate 15 (see FIG.13). Namely, according to the operation pedal device 1, the pedal support shaft 30 can be pressed into the second insertion hole 16 by inserting the pedal support shaft 30 into the first insertion hole 11 of the first side plate 10, the operation pedal 20, and the second insertion hole 16 of the second side plate 15 in order, firmly connecting the pedal support shaft 30 to the pedal bracket 5 (see FIGs.12 and 13).

In the third embodiment, the plurality of shaft side ridge parts 33 are formed at the end of the pedal support shaft 30 (see FIG.10), and each the shaft side ridge part 33 is pressed into each the fixed groove 18 formed in the second insertion hole 16 of the second side plate 15. Accordingly, according to the operation pedal device 1, since the portion press-contacting with each other can be increased by cooperation of each the shaft side ridge part 33 of the pedal support shaft 30 and each the fixed grove 18 of the second insertion hole 16, the pedal support shaft 30 can be attached to the pedal bracket 5 more firmly. According to the operation pedal device 1, even in the case where the pedal support shaft 30 is removed from the pedal bracket 5 for replacement of the operation pedal 20 etc., pulling out the pedal support shaft 30 is only needed and thus the work efficiency in this case can be also improved.

As illustrated in FIGs.10, 12, and 13, each the shaft side ridge part 33 in the third embodiment includes the first ridge part 34 and the second ridge part 35, and the second ridge part 35 is located on the downstream side in the insertion direction I relative to the first ridge part 34 in the shaft side ridge part 33. The second ridge part 35 is formed so as to have the smallest area of the cross section orthogonal to the axial direction of the pedal support shaft 30 at the end on the downstream side in the insertion direction I of the pedal support shaft 30. Accordingly, according to the operation pedal device 1, when the end of the pedal support shaft 30 is pressed into the second insertion hole 16, the second ridge parts 35 can easily enter the fixed grooves 18. As a result, according to the operation pedal device 1, press-in of the shaft side ridge parts 33 into the fixed grooves 18 can be easily realized, and thus the workability of attaching the pedal support shaft 30 to the pedal bracket 5 can be improved.

In the third embodiment, while the cross-sectional area of the first ridge part 34 in each the shaft side ridge part 33 gradually increases toward the downstream side in the insertion direction I of the pedal support shaft 30, the cross-sectional area inside each the fixed groove 18 of the second insertion hole 16 gradually decreases toward the first side plate 10 in the plate thickness direction of the second side plate 15 (see FIGs.12 and 13).

Thus, according to the operation pedal device 1, even in the case where a load in the direction of pulling out of the second insertion hole 16 accidentally works on the pedal support shaft 30, a load opposite to the pulling out direction can be made to work on the pedal support shaft 30 by cooperation of the end surface of the first ridge part 34 and the inner surface of the fixed groove 18, and thus the pedal support shaft 30 can be prevented from being accidentally pulled out of the pedal bracket 5 and the operation pedal 20.

When the pedal support shaft 30 is removed from the pedal bracket 5 for replacement of the operation pedal 20 etc., pulling out the pedal support shaft 30 is only needed after a larger force in consideration of a load generated by cooperation of the first ridge part 34 and the inner surface of the fixed groove 18 is worked on the pedal support shaft 30, and thus the work efficiency can be also improved in this case.

Although the present invention has been described based on the embodiments, it is understood that the present invention is not limited to embodiments as described above, and the various changes, substitutions, and alterations could be made hereto without departing from the spirit and scope of the invention. For example, although the operation pedal device 1 is used for clutch operation of a vehicle in the above embodiments, the present invention is not limited to this use. The present invention can be applied to, for example, an operation pedal device used for accelerator operation of a vehicle and an operation pedal device used for braking operation of a vehicle.

In the embodiments as described above, although changes in the cross sections of the ridge part 17 and the shaft side ridge part 33 are realized by changing the protrusion amount of the ridge part 17 and the ridge height of the shaft side ridge part 33 with the widths of the ridge part 17 and the shaft side ridge part 33 fixed, the present invention is not limited to this mode. For example, the changes in the cross sections of the ridge part 17 and the shaft side ridge part 33 can be realized by changing the widths of the ridge part 17 and the shaft side ridge part 33 with the protrusion amount of the ridge part 17 and the ridge height of the shaft side ridge part 33 fixed. Likewise, the changes in the cross sections of the ridge part 17 and the shaft side ridge part 33 may be realized by changing the widths of the ridge part 17 and the shaft side ridge part 33 while changing the protrusion amount of the ridge part 17 and the ridge height of the shaft side ridge part 33.

In the embodiments as described above, although the changes in the cross sections inside the fixed groove 18 and the shaft side groove 32 are realized by changing the depths of the fixed groove 18 and the shaft side groove 32 with the widths of the fixed groove 18 and the shaft side groove 32 fixed, the present invention is not limited to this mode. For example, the changes in the cross sections inside the fixed groove 18 and the shaft side groove 32 may be realized by changing the widths of the fixed groove 18 and the shaft side groove 32 with the depths of the fixed grove 18 and the shaft side groove 32 fixed. Likewise, the changes in the cross sections of the fixed groove 18 and the shaft side groove 32 may be realized by changing the widths of the fixed groove 18 and the shaft side groove 32 while changing the depths of the fixed groove 18 and the shaft side groove 32.

In the embodiments as described above, although the pedal bracket 5, the operation pedal 20, and the pedal support shaft 30 configuring the operation pedal device 1 are made of synthetic resin, the present invention is not limited to this material. In the vehicle operation pedal device according to the present invention, it is sufficient for only the support shaft (in the above embodiments, the pedal support shaft 30) to be made of synthetic resin and the pedal bracket and the operation pedal 20 may be made of another material (for example, metal material). Each the synthetic resin forming the pedal bracket 5, the operation pedal 20, and the pedal support shaft 30 need not be the same type and can be appropriately changed depending on use of each part.

### EXPLANATION OF REFERENCE NUMERALS

- 1: operation pedal device
- 5: pedal bracket
- 10: first side plate
- 11: first insertion hole
- 15: second side plate
- 16: second insertion hole
- 17: ridge part
- 20: operation pedal
- 30: pedal support shaft
- 32: shaft side groove
- I: insertion direction

## Claims

1. A vehicle operation pedal device comprising:
a pedal bracket including:
a first side plate; and
a second side plate arranged with a predetermined gap from the first side plate in a vehicle width direction and configured to be faced the first side plate;
an operation pedal pivotally arranged with respect to the pedal bracket between the first side plate and the second side plate; and
a support shaft made of synthetic resin arranged from the first side plate to the second side plate and configured to be pivotally supported the operation pedal; wherein
the support shaft is inserted into a first insertion hole formed in the first side plate and pressed into a second insertion hole formed in the second side plate,
an end of the support shaft to be pressed into the second insertion hole includes a plurality of shaft side grooves configured to be depressed from an outer peripheral surface of the support shaft and extended along an axial direction of the support shaft, and
the second insertion hole includes a plurality of ridge parts configured to be protruded toward an inside of the second insertion hole, extended in a plate thickness direction of the second side plate, and respectively pressed into the shaft side grooves of the support shaft.

2. The vehicle operation pedal device according to claim 1, wherein
the shaft side groove is formed so that an area of a cross section inside the shaft side groove orthogonal to the axial direction gradually increases toward a downstream side in an insertion direction of the support shaft into the second insertion hole.

3. The vehicle operation pedal device according to claim 1 or 2, wherein
the ridge part is formed so that an area of a cross section of the ridge part orthogonal to the plate thickness direction gradually decreases toward the first side plate in the plate thickness direction of the second side plate.

4. A vehicle operation pedal device comprising:
a pedal bracket including:
a first side plate; and
a second side plate arranged with a predetermined gap from the first side plate in a vehicle width direction and configured to be faced the first side plate;
an operation pedal pivotally arranged with respect to the pedal bracket between the first side plate and the second side plate; and
a support shaft made of synthetic resin arranged from the first side plate to the second side plate and configured to be pivotally supported the operation pedal, wherein
the support shaft is inserted into a first insertion hole formed in the first side plate and pressed into a second insertion hole formed in the second side plate,
an end of the support shaft to be pressed into the second insertion hole includes a plurality of shaft side ridge parts configured to be protruded from an outer peripheral surface of the support shaft and extended along an axial direction of the support shaft, and
the second insertion hole includes a plurality of fixed grooves configured to be depressed toward an outside of the second insertion hole, extended in a plate thickness direction of the second side plate, and into which the shaft side ridge parts of the support shaft are respectively pressed.

5. The vehicle operation pedal device according to claim 4, wherein
the shaft side ridge part is formed so that an area of a cross section of the shaft side ridge part orthogonal to the axial direction gradually decreases toward a downstream side in an insertion direction of the support shaft into the second insertion hole.

6. The vehicle operation pedal device according to claim 4 or 5, wherein
the fixed groove is formed so that an area of a cross section inside the fixed groove orthogonal to the plate thickness direction gradually increases toward the first side plate in the plate thickness of the second side plate.

7. The vehicle operation pedal device according to claim 4, wherein
the shaft side ridge part includes:
a first ridge part formed so that the area of the cross section of the shaft side ridge part orthogonal to the axial direction gradually increases toward the downstream side in the insertion direction of the support shaft; and
a second ridge part located on the downstream side in the insertion direction relative to the first ridge part and formed so that the area of the cross section of the shaft side ridge part orthogonal to the axial direction gradually decreases toward the downstream side in the insertion direction of the support shaft, and wherein
the fixed groove is formed so that an area of a cross section inside the fixed groove orthogonal to the plate thickness direction gradually decreases toward the first plate in the plate thickness direction of the second side plate.
